# EUROPÄISCHE PATENTSCHRIFT

(11) **EP 1 933 217 B1**
(45) Veröffentlichungstag und Bekanntmachung des Hinweises auf die Patenterteilung: **15.02.2012**
(21) Anmeldenummer: 06125471.0
(22) Anmeldetag: 06.12.2006
(51) Int. Cl.: G05D 7/01, E03C 1/08

(54) **Durchflussmengenregler**
Flow rate regulator
Régulateur de débit

(43) Veröffentlichungstag der Anmeldung: 18.06.2008
(73) Patentinhaber: Neoperl GmbH, 79379 Müllheim (DE)
(72) Erfinder: Zoller, Uwe, 79424 Auggen (DE)
(74) Vertreter: Kruspig, Volkmar

(56) Entgegenhaltungen:
- EP-A- 1 600 839
- DE-U1-202005 004 195

## Beschreibung

Die Erfindung betrifft einen Durchflussmengenregler für sanitäre Zwecke mit einem Gehäusekörper, welcher mindestens eine Durchgangsöffnung umfasst, gemäß Oberbegriff des Patentanspruchs 1.

Durchflussmengenregler, mit denen die pro Zeiteinheit entnehmbare Wassermenge auf eine definierte maximale Wassermenge eingeregelt werden kann, gehören zum Stand der Technik. Beispielsweise sei diesbezüglich auf die WO 2005/118968 A1 verwiesen. Bekannte Durchflussmengenregler weisen einen ringförmigen Drosselkörper aus elastischem Material auf, der zwischen sich und zumindest einem gehäusefesten Teil einen Steuerspalt begrenzt, wobei der Durchtrittsquerschnitt durch den sich unter der beim Durchströmen bildenden Druckdifferenz verformenden Drosselkörper veränderbar ist.

Um den aus der Auslaufmündung eines sanitären Wasserauslaufs austretenden Wasserstrahl zu einem gegebenenfalls auch mit Luft angereicherten, perlendweichen homogenen Wasserstrahl zu formen, sind Strahlregler bekannt. Solche Strahlregler besitzen einen zuströmseitigen Strahlzerleger, der den in der Wasserleitung zufließenden Strom in eine Vielzahl zu belüftender Einzelstrahlen unterteilt. Der Strahlregler dieser bekannten Art ist meist als eine quer zur Strömungsrichtung orientierte Lochplatte ausgestaltet.

Aus der DE 100 27 986 A1 ist eine sanitäre Einsatzeinheit vorbekannt, die in das Auslaufmundstück einer Auslaufarmatur montierbar ist. Diese vorbekannte Einsatzeinheit besitzt einen zuströmseitigen Durchflussmengenregler, dem ein abströmseitiger Strahlregler nachgeschaltet ist.

Bei dem Flüssigkeitsmengenregler mit Geräuschdämpfungsglied nach DT 24 03 084 A1 wird als Drosselkörper ein sogenannter O-Ring aus einem elastomeren Material verwendet. Unter steigender Druckbelastung verformt sich dieser O-Ring und verschließt zunehmend einen Ringspalt bzw. Steuerspalt, so dass die durchfließende Menge pro Zeiteinheit reduziert ist. Um aufgrund der reduzierten Strömungsquerschnitte dennoch die Geräuschbelastung beim Einsatz vorbekannter Mengenregler in Grenzen zu halten, sind die Austrittsöffnungen des Geräuschdämpfungsglieds so ausgelegt, dass sie beim Durchsatz der Regelwassermenge etwa den gleichen Durchflusswiderstand erzeugen wie der vorgeschaltete Flüssigkeitsmengenregler, wenn dieser sich noch nicht in Regelstellung befindet, aber schon etwa 90% der Regel-Nennwassermenge durchgesetzt werden.

Bei bestimmten Einbaufällen ist es wünschenswert, den Durchflusswiderstand des Geräuschdämpfungsglieds im niedrigen Wasserdruckbereich so gering wie möglich zu halten, so dass schon bei verhältnismäßig niedrigem Wasserdruck die Regelwassermenge durchsetzbar ist. Dies wird gemäß der Lehre nach DT 24 03 084 A1 dadurch erreicht, dass auf einer in der Mitte des Bodens des Einsatzteils vorgesehenen Überhöhung eine elastische Prallplatte angeordnet ist, unter der sich größere Ausflussöffnungen befinden, durch die bis zu einem Wasservordruck von 0,5 bar die von dem Regler freigegebene Wassermenge nahezu ohne Druckverlust abfließen kann. Bei höher werdendem Fließdruck verdeckt die elastische Prallplatte in zunehmendem Maße die unter ihr liegenden Ausflussöffnungen, so dass bei einem Wasserdruck über 2 bar nur noch die außen liegenden Schlitze geöffnet sind, deren Gesamtquerschnitt in Beziehung zur Regelmenge so ausgelegt ist, dass das unerwünschte Abreißgeräusch erst bei einem Flüssigkeitsdruck über 6 bar, allerdings in gemilderter Form, auftritt. Um zu vermeiden, dass die elastische Prallplatte schon bei zu niedrigem Wasserdruck die unter ihr liegenden Durchflussöffnungen abschließen kann, ist es notwendig, spezielle halbkugelförmige Nocken vorzusehen. Diese Nocken stellen sicher, dass erst bei einem Wasserdruck über 0,5 bar das Verschließen der Durchflussöffnungen unter der Prallplatte einsetzt.

Bezüglich des Standes der Technik von Durchflussbegrenzern oder Durchflussmengenreglern für Sanitärarmaturen sei noch auf die US-PS 4,000,857, US-PS 3,847,178, die DE 198 51 151 A1 oder die DE 103 12 854 A1 verwiesen.

Den bekannten sanitären Einsetzeinheiten ist, insofern diese einen Durchflussmengenregler mit oder ohne nachgeschaltetem Strahlregler aufweisen, der Nachteil gemeinsam, dass die gewünschte Regelwirkung erst bei anstehenden Druckverhältnissen ab ca. 1 bar einsetzt. Das Regelverhalten im unteren Druckbereich ist ungenügend.

Aus der EP 1 600 839 A2 ist ein Durchflussmengenregler mit einem Reglergehäuse, in dem in einem Durchtrittskanal ein ringförmiger Drosselkörper aus elastischem Material vorgesehen ist, vorbekannt. Gemäß der dortigen Lehre geht es darum, einen druckunabhängigen maximalen Volumenstrom mit geringerem Aufwand von außen verändern zu können. Hierfür ist im Reglergehäuse ein verschiebbares Gehäuseteil vorhanden, das ein nach außen vorstehendes Steuerelement aufweist. Das innere Gehäuseteil kann über das Steuerelement bedient werden. Zu diesem Zweck ist am Gehäuseteil ein Außengewinde vorgesehen, auf das das Innengewinde einer Stellschraube aufgeschraubt ist. Die Stellschraube beaufschlagt freie Enden von Zapfen derart, dass ein Verdrehen der Verstellschraube eine axiale Verschiebung des inneren Gehäusesteils und seines Regelkerns bewirkt.

Aus der gattungsbildenden DE 20 2005 004 195 U1 ist ein Durchflussmengenregler vorbekannt, der einen zentralen Steuerkörper aufweist, welcher zwei Teilabschnitte besitzt, die zwei Durchflussleistungen und/oder mindestens zwei Druckbereichen zugeordnet sind. Die Teilabschnitte unterscheiden sich durch voneinander abweichende Kegel-, Zapfen- oder dergleichen Steuerkörper-Querschnitte. Um den Drosselkörper für bestimmte Durchflussleistungen oder Druckbereiche einsetzen zu können, ist eine Bewegbarkeit zwischen zwei Anschlägen vorgesehen. Weiterhin ist ein Wendeteil vorhanden, das dem Ändern der Durchströmrichtung im Durchflussmengenregler bei ansonsten gleichbleibender Durchflussrichtung dient.

Aus den vorgenannten Gründen war es daher nicht ohne weiteres möglich, standardisierte sanitäre Einsetzeinheiten vorrätig zu halten und anzubieten; vielmehr mussten je nach Einsatzgebiet und vorhandenen Druckverhältnissen bestimmte Einheiten ausgewählt werden, wobei gegebenenfalls Versuche notwendig waren, um die geeignete Klasse von Einsetzeinheiten zu finden.

Aus dem Vorgenannten ist es daher Aufgabe der Erfindung, einen weiterentwickelten Durchflussmengenregler für sanitäre Zwecke mit einem Gehäusekörper, welcher mindestens eine Durchgangsöffnung umfasst und die von einem in Zustromrichtung liegenden Blendenteil begrenzt ist, anzugeben, welcher über einen äußerst breiten Druckbereich verwendbar ist und der ein schnelles Ansprechverhalten auch bei Druckverhältnissen kleiner 1 bar gewährleistet. Das Regelverhalten soll mit einfachen konstruktiven Mitteln vorgeb- bzw. einstellbar sein, ohne dass sich die Kosten für den Durchflussmengenregler wesentlich erhöhen.

Die Lösung der Aufgabe der Erfindung erfolgt durch einen Durchflussmengenregler gemäß der Merkmalskombination nach Patentanspruch 1, wobei die Unteransprüche zweckmäßige Ausgestaltungen und Weiterbildungen darstellen.

Es wird von einem Durchflussmengenregler für sanitäre Zwecke mit einem Gehäusekörper ausgegangen, welcher mindestens eine Durchgangsöffnung umfasst, die von einem in Zustromrichtung liegenden Blendenteil begrenzt ist. Zwischen dem Blendenteil und der Durchgangsöffnung verbleibt ein Ringspalt. Weiterhin ist in Ringspaltnähe ein elastischer Drosselkörper angeordnet, welcher den Ringspalt aufgrund der Verformung des Drosselkörpermaterials bei sich bildenden Druckdifferenzen des strömenden Mediums verändert.

Erfindungsgemäß führt das Blendenteil eine vom Druck des strömenden Mediums abhängige Relativbewegung in Richtung Ringspalt aus.

Hierdurch wird die Ringspaltquerschnittsfläche derart beeinflusst, dass der Verlauf der Druck-Durchflussmengen-Kennlinie des Reglers an unterschiedlichste Versorgungs- und Druckverhältnisse anpassbar ist.

Demnach ist das Blendenteil, auch Regelstern genannt, nicht starr oder unbeweglich, sondern in der Lage, selbst eine Relativbewegung zum Ringspalt auszuführen. Bevorzugt spricht das Blendenteil bezogen auf die gewünschte Relativbewegung hin zum Ringspalt früher an, d.h. die Verformung des Drosselkörpers, z.B. in Form des bekannten O-Rings, findet später, d.h. mit steigendem Druck statt.

Es liegt demnach die Bewegungsschaltschwelle des Blendenteils druckseitig unterhalb des Ansprechens oder der Schwelle des elastischen Drosselkörpers.

Die Bewegungsrichtung des Blendenteils folgt im Wesentlichen der Strömungsrichtung des Mediums, wobei die Verformung des Drosselkörpers überwiegend senkrecht zur Strömungsrichtung orientiert ist.

Das Blendenteil kann die Form eines Vielecks, eines Sterns oder einer Tellerscheibe aufweisen und z.B. aus einem Kunststoffmaterial gefertigt werden.

Am Gehäusekörper oder mit diesem in Verbindung stehend ist ein Stiftbolzen vorgesehen, welcher das Blendenteil führend aufnimmt, das hierfür eine an die Stiftbolzenabmessungen angepasste Ausnehmung aufweist. Es ist also das Blendenteil auf dem Stiftbolzen beweglich gelagert, wobei sich der Stiftbolzen in Zustromrichtung erstreckt.

Das Blendenteil ist auf dem Stiftbolzen in Zustromrichtung unter Vorspannung gehalten, wobei hierfür eine Schraubendruckfeder auf dem Stiftbolzen anordenbar ist. Im vorgespannten Zustand befindet sich das Blendenteil in seiner entferntesten Position bezogen auf den Ringspalt, so dass auch bei niedrigen Druckverhältnissen eine möglichst große Wassermenge den Durchflussmengenregler durchtritt. Mit steigendem Druck bewegt sich das Blendenteil unter Überwindung der Federvorspannkraft in Richtung Ringspalt mit der Folge, dass sich dieser verkleinert und die Drosselwirkung steigt. Gelangt das Blendenteil in seine Endlage, setzt die Wirkung des elastischen Drosselkörpers ein, der als elastischer O-Ring ausführbar ist. Dieser elastische O-Ring verändert seine Querschnittsfläche und reduziert den freien Durchtritt im Ringspalt mit steigendem Druck weiter mit der Folge, dass trotz des vorerwähnten Druckanstiegs die Durchflussmenge flüssigen Mediums nahezu konstant bleibt.

Zur Aufnahme des Stiftbolzens können am Gehäusekörper beabstandete Verstrebungen vorgesehen sein, wobei der Gehäusekörper, der Stiftbolzen und die Verstrebungen auch einstückig, z.B. als Kunststoffspritzteil ausgebildet werden können.

Die konstruktive Lösung des Durchflussmengenreglers gemäß der Erfindung geht grundsätzlich von einer konzentrischen Anordnung von Gehäusekörper, Blendenteil und Stiftbolzen aus.

Erfindungsgemäß kann der Durchflussmengenregler sowohl zustromseitig vor einen Strahlregler oder aber auch in ein Rückschlagventil der bekannten Art integriert werden.

Um das gewünschte optimierte Regelverhalten zu gewährleisten, muss der Durchflussmengenregler im Vergleich zum Stand der Technik nur über eine Beweglichkeit des Blendenteils relativ zum Ringspalt verfügen, wobei diese bei Druckveränderungen einsetzende Bewegung durch die vorgesehene Vorspannung reversibel und reproduzierbar ist. Eine nachteilige Geräuschbildung tritt beim erfindungsgemäßen Durchflussmengenregler nicht auf, so dass Maßnahmen zur Geräuschdämpfung entfallen können.

Durch die bei Druckveränderungen erfolgende Bewegung des Blendenteils tritt eine Selbstreinigung des Ringspaltbereichs ein mit der Folge eines verhesserten Betriebsverhaltens einer mit einem derartigen Durchflussmengenregler versehenen Armatur.

Die Erfindung soll nachstehend anhand eines Ausführungsbeispiels sowie unter Zuhilfenahme von Figuren näher erläutert werden.

Hierbei zeigen:
- Fig. 1 und 2: sowie Fig. 3 und 4 Schnittdarstellungen und Draufsichten eines erfindungsgemäßen Durchflussmengenreglers für sanitäre Zwecke mit veränderter Position des Blendenteils unter verschiedenen Druckverhältnissen;
- Fig. 5 bis 8: perspektivische Schnittdarstellungen sowie Teilschnitte eines mit einem erfindungsgemäßen Durchflussmengenregler versehenen Strahlreglers als sanitäres Einsetzstück;
- Fig. 9 bis 12: perspektivische Schnitte und Teilschnitte einer weiterer Ausführungsform eines mit einem Durchflussmengenregler gemäß der Erfindung versehenen Strahlreglers;
- Fig. 13 und 14: Schnittdarstellungen eines Rückschlagventils, dem zustromseitig ein erfindungsgemäßer Durchflussmengenregler vorgeschaltet ist, mit der Darstellung verschiedener Positionen des Blendenteils entsprechend unterschiedlichen Drücken;
- Fig. 15: eine Schnittdarstellung eines Durchflussmengenreglers gemäß Fig. 1 bis 4 mit erreichter Endlage des Blendenteils und beginnender Verformung des elastischen Drosselkörpers bei steigendem Druck; und
- Fig. 16: verschiedene Druck-Durchflussmengen-Kennlinien.

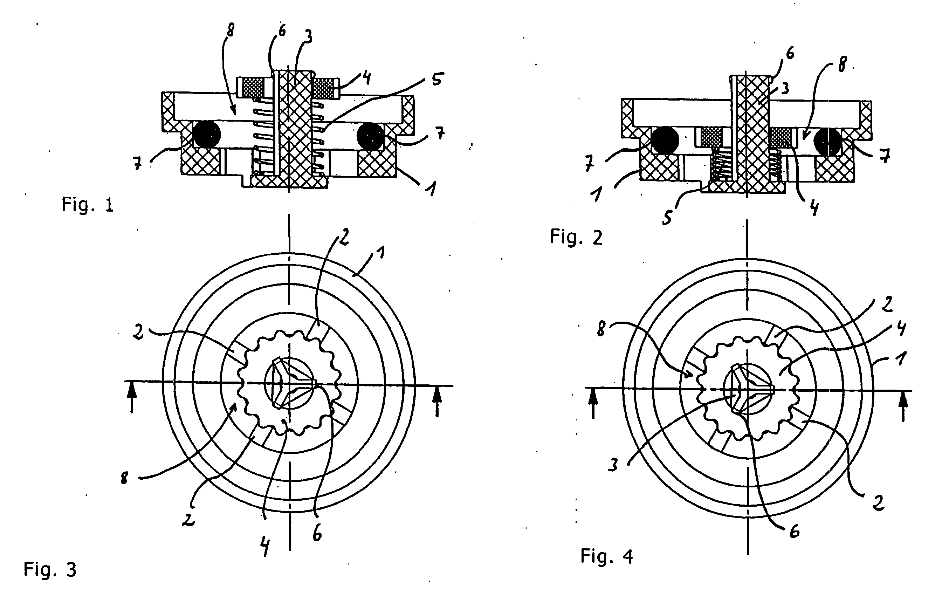

Der Durchflussmengenregler gemäß Fig. 1 bis 4 geht von einem Gehäusekörper 1 aus, wobei am Gehäusekörper 1 beabstandete Verstrebungen 2 vorgesehen sind, welche einen Stiftbolzen 3 aufnehmen oder in einen solchen Stiftbolzen 3 übergehen.

Ein als Regelstern ausgebildetes Blendenteil 4 sitzt verschieblich auf dem Stiftbolzen 3 und steht durch Wirkung einer Schraubendruckfeder 5 unter Vorspannung.

Nasen 6 am oberen Ende des Stiftbolzens 3 verhindern ein unerwünschtes Abdrücken des Blendenteils 4 und wirken als oberer Anschlag.

Im Gehäusekörper 1 sitzt ein elastischer Drosselkörper 7, hier als O-Ring, bestehend aus einem elastomeren Material ausgeführt.

Das in der Figur nicht dargestellte Medium strömt durch den Ringspalt 8, und zwar gemäß der Figur von oben nach unten.

Bezogen auf die Darstellung nach Fig. 1 und 3 besitzt der Ringspalt 8 eine maximale lichte Weite, so dass bei geringen Drücken eine ausreichende Menge Medium durch den Ringspalt 8 hindurchtreten kann.

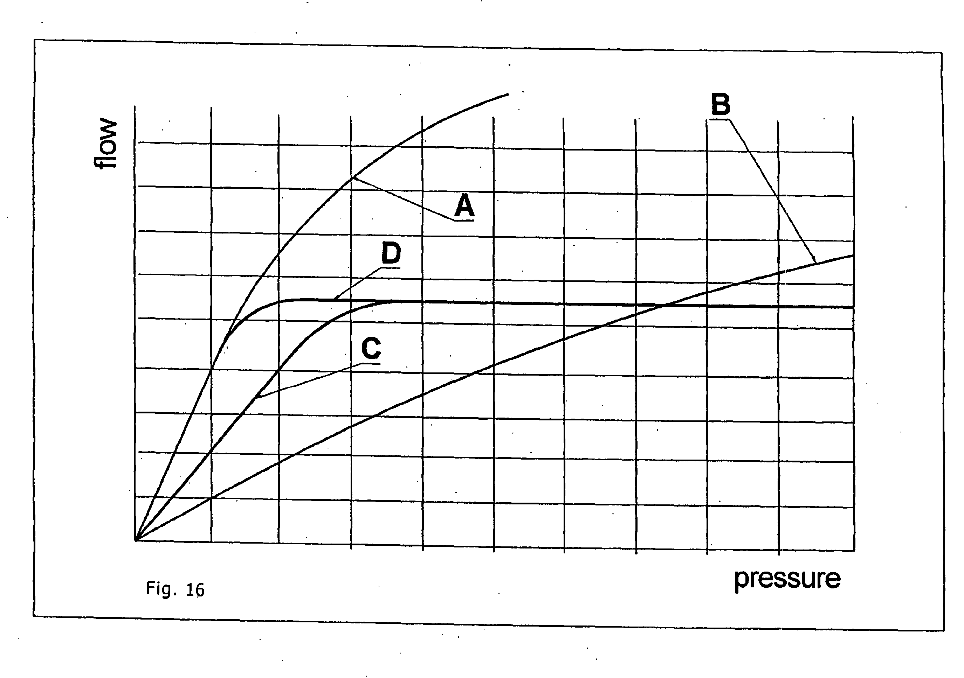

Mit ansteigendem Druck des Mediums bewegt sich das Blendenteil 4 auf der Stiftbolzenführung nach unten (Fig. 2 und 4), so dass sich die lichte Weite des Ringspalts 8 entsprechend reduziert. Die Vorspannung der Schraubendruckfeder 5 ist so gewählt, dass eine Bewegung des Blendenteils 4 auf dem Stiftbolzen 3 bei geringen Drücken möglich ist, so dass sich der optimierte Kennlinienverlauf D nach Fig. 16 ergibt.

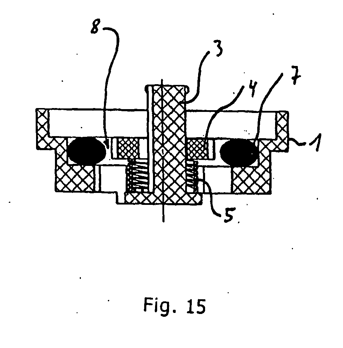

Unter Hinweis auf Fig. 15 erfolgt mit weiterer Erhöhung des Drucks und erreichter unterer Endlagenposition des Blendenteils 4 eine elastische Verformung des Drosselkörpers 7 mit daraus sich ergebender weiterer Reduzierung des Ringspalts 8 und Durchflussmengenbegrenzung (horizontaler Verlauf der Kennlinie D nach Fig. 16).

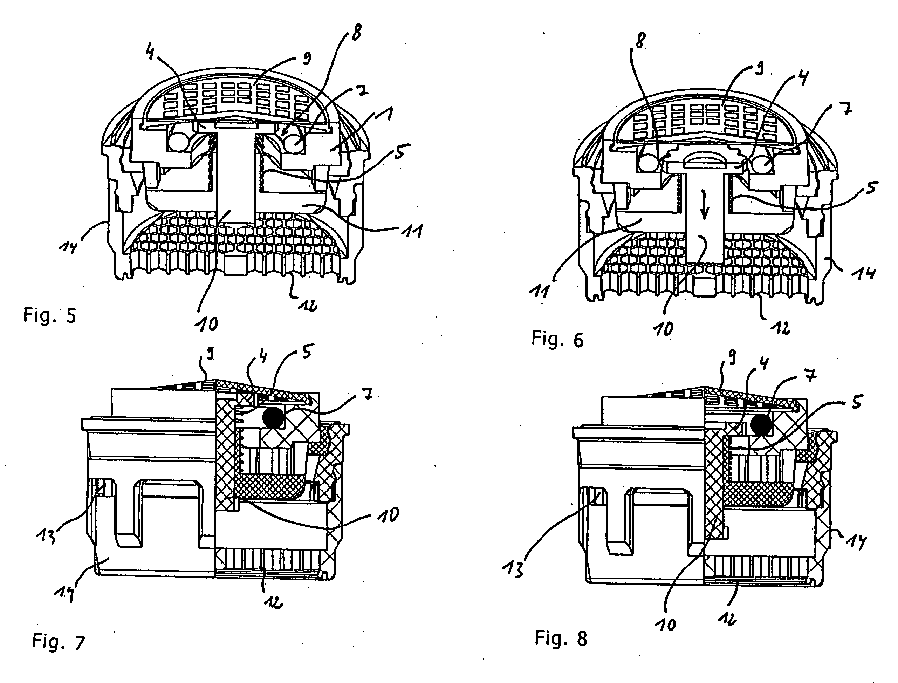

Die Darstellungen nach Fig. 5 bis 8 zeigen die Anordnung eines Durchflussmengenreglers innerhalb eines Strahlregler-Einsetzteils für eine Wasserauslaufarmatur.

Oberhalb des Durchflussmengenreglers ist ein Vorsatzsieb 9 befindlich, um grobe Verschmutzungen, die sich im strömenden Medium befinden, zurückzuhalten.

Die bei Druckveränderungen sich ergebenden Bewegungen des jeweiligen Blendenteils 4 ermöglichen den Durchtritt und/oder das Lösen von eingedrungenen Verschmutzungspartikeln. Im Vergleich zum Bekannten besteht durch diese Reinigungswirkung die Möglichkeit, die Maschenweite des Vorsatzsiebs 9 zu vergrößern. Eine derartige Vergrößerung der Maschenweite des Vorsatzsiebs 9 hat den Vorteil, dass die nicht zu vermeidende Drosselwirkung, die vom Vorsatzsieb 9 herrührt, reduziert ist, was sich insbesondere bei niedrigen Drücken des strömenden Fluids positiv auswirkt.

Der Gehäusekörper 1 des Durchflussmengenreglers dieser Ausführungsform nimmt ebenfalls den elastischen Drosselkörper 7 in Form eines O-Rings auf, so dass sich ein Ringspalt 8 bildet.

Das Blendenteil 4 besitzt hier einen angeformten Führungsfortsatz 10, dessen freies Ende in eine entsprechende Öffnung einer Befestigungsplatte 11 eintaucht.

Die Befestigungsplatte 11 kann Teil des Strahlreglers sein.

Austrittsseitig der Anordnung nach den Fig. 5 bis 8 befindet sich eine strahlformende Wabenplatte 12 gemäß dem Stand der Technik. Über Belüftungsöffnungen 13 wird das durchflussmengenbegrenzte Medium mit Luft angereichert, so dass sich ein entsprechender Strahl austrittsseitig der Wabenplatte 12 ergibt. Die vorstehend erläuterte Anordnung wird von einem Hülsenkörper 14 aufgenommen und kann von einer nicht dargestellten Verschraubung im Bereich des Wasseraustritts einer Auslaufarmatur befestigt werden.

Aus dem Vergleich der Darstellungen in Fig. 5 und 7 mit den Fig. 6 und 8 ergibt sich wiederum die nachvollziehbare Wirkung des beweglichen Blendenteils 4 mit Führungsfortsatz 10 und Schraubendruckfeder 5.

Mit ansteigendem Druck findet eine Bewegung des Blendenteils 4 mit Führungsfortsatz 10 in Pfeilrichtung (Fig. 6 und 8) nach unten statt und es reduziert sich die lichte Weite des Ringspalts 8 mit gegebenenfalls später eintretender Verformung (nicht gezeigt) des elastischen Drosselkörpers 7.

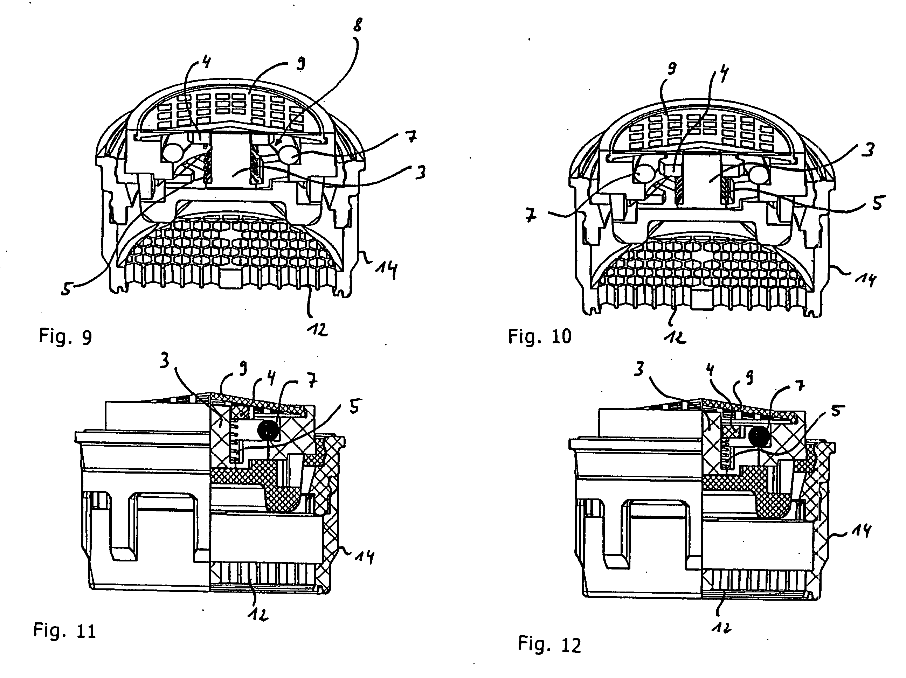

Die Darstellung nach den Fig. 9 bis 12 zeigt eine Ausführungsform eines Durchflussmengenreglers, wie er bereits anhand der Fig. 1 und 4 erläutert wurde, jedoch nunmehr eingesetzt und kombiniert mit einem Strahlregler in der Ausführungsform zum Erhalt eines belüfteten Strahls analog Fig. 5 bis 8.

Im Unterschied zur Darstellung nach Fig. 5 bis 8 ist jedoch bei der Variante nach Fig. 9 bis 12 ein Stiftbolzen 3 vorhanden, auf dem das Blendenteil 4 längsverschieblich unter Überwindung der Vorspannung durch die Schraubendruckfeder 5 gelagert ist. Den gezeigten Ausführungsformen nach den Fig. 1 bis 12 ist gemeinsam, dass eine Veränderung des Ringspalts 8 durch Variation der Position des Blendenteils 4 bezogen auf dessen Lage zum Drosselkörper 7 stattfindet. Die Vorspannung der Schraubendruckfeder 5 oder eines ähnlich elastischen Elements ist entsprechend der Klassifikation des Reglers wählbar und insbesondere auf ein Ansprechen bei Drücken kleiner 1 bar ausgerichtet.

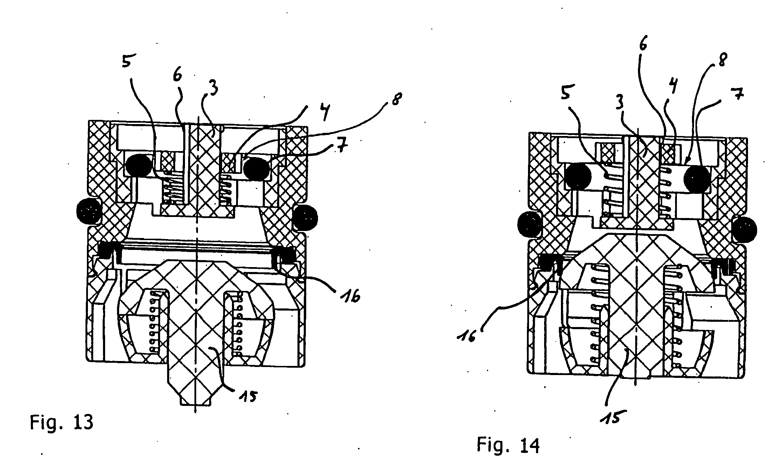

Die Lösung eines Durchflussmengenreglers mit Stiftbolzen 3 und hierauf verschiebebeweglich gelagertem Blendenteil 4 kann mit einem Rückschlagventil 15 zum Einsetzen in eine Rückschlagventilpatrone gemäß Fig. 13 bzw. 14 kombiniert werden.

Nach Fig. 13 befindet sich der kegelige Schließkörper 15 des Rückschlagventils in einer Position, die einen freien Durchfluss des strömenden Mediums gestattet. Gemäß Fig. 14 steht kein äußerer Druck des Mediums an, so dass der Konus des Schließkörpers 15 an einer umlaufenden Dichtlippe 16 anliegt (geschlossene Position).

Der mit dem Rückschlagventil kombinierte Durchflussmengenregler, wie in der Fig. 13 und 14 gezeigt, erfüllt seine Funktion analog der Erläuterung gemäß Ausführungsbeispiel nach Fig. 1 und 3. In Fig. 13 befindet sich der Schließkörper 15 in einer offenen Position, d.h. der anstehende Wasserdruck drückt den Ventilkörper 15 unter Überwindung der Federrückstellkraft nach unten. Ebenfalls unter Wirkung des anstehenden Druckes bewegt sich das Blendenteil 4 unter Überwindung der Kraft resultierend von der beispielhaft gezeigten Schraubendruckfeder 5 nach unten, so dass sich die Querschnittsfläche des Ringspalts 8 reduziert. Bei weiterer Druckerhöhung kommt es dann zur Verformung des elastischen Drosselkörpers 7, wobei infolge der Verformung eine weitere Verkleinerung des Ringspalts 8 eintritt. Trotz steigendem Druck des fluiden Mediums bleibt aufgrund des Regelungseffekts die Durchflussmenge pro Zeiteinheit gleich (siehe Fig. 16, Kurvenverlauf D).

Die Fig. 16 zeigt typische Kennlinien der Durchflussmenge über den Druck einer als Drossel anzusehenden sanitären Einsetzeinheit, wobei mit der Kurve A ein Verlauf ohne eingesetzten Durchflussmengenregler symbolisiert ist. Die Kennlinie B zeigt die Wirkung einer auf einen maximalen Durchfluss bei gegebenem Druck abgestimmten Drossel gemäß Normvorgaben ohne jedwede Regeleigenschaften.

Die Kennlinie C zeigt den Verlauf des Durchflussmenge über den Druck bei einem klassischen Regler ohne erfindungsgemäße mehrstufige Beeinflussung des Mediums.

Fig. D zeigt eine beispielhafte Kennlinie, wie sie beim Einsatz des erfindungsgemäßen Durchflussmengenreglers vorliegt. Hier ist ersichtlich, dass bereits bei wesentlich kleineren Drücken im Vergleich zur Kennlinie nach C der Regelbereich einsetzt, so dass bedingt durch den steileren Anstieg bei geringen Drücken eine ausreichende Durchflussmenge zur Verfügung steht.

Der erfindungsgemäße Durchflussmengenregler kann daher für nahezu alle Druckverhältnisse ohne weitere Modifikationen Anwendung finden. Die Bewegung des Blendenteils sorgt für einen Selbstreinigungseffekt, so dass sich womöglich im Ringspalt befindliche Fremdkörper aus diesem heraus bewegen können und wodurch eine Optimierung der Öffnungen eines gegebenenfalls vorgesehenen Siebes erfolgen kann.

### Bezugszeichenliste

- 1: Gehäusekörper
- 2: Verstrebung
- 3: Stiftbolzen
- 4: Blendenteil
- 5: Schraubendruckfeder
- 6: Nase
- 7: Drosselkörper
- 8: Ringspalt
- 9: Vorsatzsieb
- 10: Führungsfortsatz
- 11: Befestigungsplatte
- 12: Wabenplatte
- 13: Belüftungsöffnung
- 14: Hülsenkörper
- 15: Schließkörper
- 16: Dichtlippe

## Patentansprüche

1. Durchflussmengenregler für sanitäre Zwecke mit einem Gehäusekörper (1), welcher mindestens eine Durchgangsöffnung umfasst, die von einem in Zustromrichtung liegenden, auf einem Stiftbolzen (3) beweglich gehaltenen Blendenteil (4) begrenzt ist, wobei der Stiftbolzen (3) am Gehäusekörper (1) oder mit diesem in Verbindung stehend vorgesehen ist und das Blendenteil (4) eine Ausnehmung aufweist, die an die Stiftbolzenabmessungen angepasst ist, wobei zwischen Blendenteil (4) und Durchgangsöffnung ein Ringspalt (8) verbleibt, weiterhin mit einem in Ringspaltnähe angeordneten, elastischen Drosselkörper (7), welcher die Ringspaltquerschnittsfläche aufgrund seiner Verformung bei unterschiedlichen Druckverhältnissen im strömenden Medium verändert,
**dadurch gekennzeichnet, dass**
das Blendenteil (4) durch eine auf dem Stiftbolzen (3) angeordnete Schraubendruckfeder (5) unter Vorspannung in Zustromrichtung gehalten ist, wobei sich im vorgespannten Zustand das Blendenteil (4) in seiner entferntesten Position bezogen auf den Ringspalt (8) befindet und sich mit steigendem Druck unter Überwindung der Federkraft in Richtung Ringspalt (8) bewegt, um die Ringspaltquerschnittsfläche zusätzlich derart zu beeinflussen, dass bei unterschiedlichsten Druckverhältnissen im strömenden Medium die Durchflussmenge nahezu konstant bleibt.

2. Regler nach Anspruch 1,
**dadurch gekennzeichnet, dass**
die Relativbewegung des Blendenteils (4) zum Ringspalt nach Überwindung einer Bewegungsschaltschwelle erfolgt, welche druckseitig unterhalb derjenigen des elastischen Drosselkörpers (7) liegt.

3. Regler nach Anspruch 1 oder 2,
**dadurch gekennzeichnet, dass**
die Verformung des Drosselkörpers (7) überwiegend senkrecht zur Strömungsrichtung orientiert ist.

4. Regler nach einem der vorangegangenen Ansprüche,
**dadurch gekennzeichnet, dass**
das Blendenteil (4) die Form eines Vielecks, Sterns oder einer Tellerscheibe mit einer Durchtrittsöffnung aufweist.

5. Regler nach einem der vorangegangenen Ansprüche,
**dadurch gekennzeichnet, dass**
am Gehäusekörper (1) beabstandete Verstrebungen (2) vorgesehen sind, welche den Stiftbolzen (3) aufnehmen.

6. Regler nach Anspruch 5,
**dadurch gekennzeichnet, dass**
Gehäusekörper (1), Stiftbolzen (3) und Verstrebungen (2) einstückig ausgebildet sind.

7. Regler nach einem der vorangegangenen Ansprüche,
**dadurch gekennzeichnet, dass**
der elastische Drosselkörper (7) ein O-Ring ist.

8. Verwendung eines Reglers nach einem der vorangegangenen Ansprüche,
**gekennzeichnet durch**
den zustromseitigen Einbau in einen Strahlregler oder ein Rückschlagventil.

## Claims

1. Flow regulator for sanitary purposes, comprising a housing body (1) which includes at least one through-hole that is restricted by a screen part (4) located in the inflow direction and movably held on a stud bolt (3), wherein the stud bolt (3) is provided on the housing body (1) or in connection with the housing body (1) and the screen part (4) includes a recess that is adapted to the dimensions of the stud bolt, with an annular gap (8) remaining between the screen part (4) and the through-hole, further comprising an elastic flow restrictor (7) that is arranged near the annular gap and alters the cross-sectional area of the annular gap owing to its deformation under different pressure conditions in the flowing medium,
**characterized in that**
the screen part (4) is biased in the inflow direction by a helical compression spring (5) arranged on the stud bolt (3), wherein, in the biased state, the screen part (4) is in its remotest position with respect to the annular gap (8) and moves towards the annular gap (8) as the pressure increases, by overcoming the spring force, so as to additionally influence the cross-sectional area of the annular gap in such a way that the flow rate remains nearly constant under the most different pressure conditions in the flowing medium.

2. Regulator according to claim 1,
**characterized in that**
the relative movement of the screen part (4) to the annular gap takes place upon overcoming a movement-initiating threshold which, in terms of the pressure, is below that of the elastic flow restrictor (7).

3. Regulator according to claim 1 or 2,
**characterized in that**
the deformation of the flow restrictor (7) is oriented mainly perpendicular to the flow direction.

4. Regulator according to one of the preceding claims,
**characterized in that**
the screen part (4) has the shape of a polygon, a star or a dished washer with a through-hole.

5. Regulator according to one of the preceding claims,
**characterized in that**
spaced apart braces (2) are provided on the housing body (1) which receive the stud bolt (3).

6. Regulator according to claim 5,
**characterized in that**
the housing body (1), the stud bolt (3) and the braces (2) are formed integrally.

7. Regulator according to one of the preceding claims,
**characterized in that**
the elastic flow restrictor (7) is an O-ring.

8. Use of a regulator according to one of the preceding claims,
**characterized by**
the installation in a flow regulator or a check valve on the inflow side.

## Revendications

1. Régulateur de débit quantitatif pour applications sanitaires comprenant un corps de boîtier (1), qui comporte au moins une ouverture traversante, laquelle est délimitée par une partie formant diaphragme (4) disposée dans la direction de l'écoulement incident et tenue mobile sur un goujon (3), ledit goujon étant prévu dressé sur le corps de boîtier (1) ou bien relié à celui-ci, et la partie formant diaphragme (4) comporte un évidement qui est adapté aux dimensions du goujon, dans lequel une fente annulaire (8) demeure entre la partie formant diaphragme (4) et l'ouverture traversante, et comprenant en outre un corps d'étranglement élastique (7) agencé au voisinage de la fente annulaire et qui, en raison de sa déformation sous des conditions de pression différentes dans le fluide en écoulement, modifie la surface de section transversale de la fente annulaire,
**caractérisé en ce que**
la partie formant diaphragme (4) est tenue sous précontrainte dans la direction de l'écoulement incident par un ressort de compression hélicoïdal (5) agencé sur le goujon (3), et dans la situation sous précontrainte la partie formant diaphragme (4) se trouve dans sa position la plus éloignée par référence à la fente annulaire (8) et se déplace, lorsque la pression augmente, en surmontant la force du ressort en direction de la fente annulaire (8), afin d'influencer additionnellement la surface de section transversale de la fente annulaire de telle façon que sous des conditions de pression différentes dans le fluide en écoulement le débit quantitatif reste pratiquement constant.

2. Régulateur selon la revendication 1,
**caractérisé en ce que** le mouvement relatif de la partie formant diaphragme (4) par rapport à la fente annulaire a lieu après dépassement d'un seuil de déclenchement de mouvement qui se trouvent du côté pression au-dessous de celui du corps d'étranglement élastique (7).

3. Régulateur selon la revendication 1 ou 2,
**caractérisé en ce que** la déformation du corps d'étranglement (7) est orientée en majeure partie perpendiculairement à la direction d'écoulement.

4. Régulateur selon l'une des revendications précédentes,
**caractérisé en ce que** la partie formant diaphragme (4) présente la forme d'un polygone, d'une étoile, ou d'un disque, avec une ouverture traversante.

5. Régulateur selon l'une des revendications précédentes,
**caractérisé en ce qu'**il est prévu des entretoises (2) écartées sur le corps de boîtier (1), lesquelles reçoivent le goujon (3).

6. Régulateur selon la revendication 5,
**caractérisé en ce que** le corps de boîtier (1), le goujon (3) et les entretoises (2) sont réalisés d'une seule pièce.

7. Régulateur selon l'une des revendications précédentes,
**caractérisé en ce que** le corps d'étranglement élastique (7) est un joint torique.

8. Utilisation d'un régulateur selon l'une des revendications précédentes,
**caractérisé par** l'intégration du côté de l'écoulement incident dans un régulateur de jet ou dans un clapet antiretour.
